# EUROPÄISCHE PATENTSCHRIFT

(11) **EP 2 740 197 B1**
(45) Veröffentlichungstag und Bekanntmachung des Hinweises auf die Patenterteilung: **02.11.2016**
(21) Anmeldenummer: 12766925.7
(22) Anmeldetag: 03.09.2012
(51) Int. Cl.: H01B 3/02, H01B 3/04, H01B 3/10, H01B 7/29, H02K 3/40, H02K 15/10

(54) **ELEKTRISCHE LEITUNGSEINRICHTUNG, ENDENGLIMMSCHUTZANORDNUNG UND VERFAHREN ZUM HERSTELLEN EINES ENDENGLIMMSCHUTZES**
ELECTRICAL CONDUCTION DEVICE, OVERHANG CORONA SHIELDING ARRANGEMENT AND METHOD FOR PRODUCING AN OVERHANG CORONA SHIELDING
DISPOSITIF CONDUCTEUR ÉLECTRIQUE, DISPOSITIF ANTI-EFFLUVES TERMINAL ET PROCÉDÉ DE PRODUCTION D'UN DISPOSITIF ANTI-EFFLUVES TERMINAL

(30) Priorität: 22.09.2011 DE 102011083214
(43) Veröffentlichungstag der Anmeldung: 11.06.2014
(73) Patentinhaber: Siemens Aktiengesellschaft, 80333 München (DE)
(72) Erfinder: KEMPEN, Stefan, 59821 Arnsberg (DE); LANG, Steffen, 91352 Hallerndorf (DE)
(86) Internationale Anmeldenummer: PCT/EP2012/067127
(87) Internationale Veröffentlichungsnummer: WO 2013/041359

(56) Entgegenhaltungen:
- EP-A1- 1 243 063
- EP-A1- 1 995 850
- EP-A1- 2 362 399
- DE-A1- 1 540 079
- DE-B- 1 160 938
- FR-A- 1 418 779
- JP-A- S5 683 238
- JP-A- S5 691 637
- JP-A- S6 122 733
- JP-A- S58 144 551
- JP-A- S59 226 641
- US-B1- 6 395 149

## Beschreibung

Die Erfindung betrifft eine elektrische Leitungseinrichtung mit einem elektrisch leitenden Leitelement, z. B. einem Kupferstab, und einer dieses Leitelement zumindest bereichsweise umgebenden elektrisch isolierenden Ummantelung. An einer Auβenseite der Ummantelung ist an einem Ende ein Endenglimmschutz bereitgestellt. Die Erfindung betrifft auch eine flächige Endenglimmschutzanordnung für eine elektrische Leiteinrichtung sowie ein Verfahren zum Herstellen eines Endenglimmschutzes für eine elektrisch isolierende Ummantelung eines elektrischen Leitelements. Ein Endenglimmschutz der genannten Art ist beispielsweise aus der EP 2362399 A1 bekannt.

Aus der DE 11 60 938 B ist ein Verfahren zum Herstellen eines Glimmschutzes für die Leiterstäbe elektrischer Maschinen bekannt, wobei Silikongummibänder gleichmäßig um die Leiterstabhülsen herumgewickelt werden, die im Nut- und Wickelprofil verschiedene Leitfähigkeit aufweisen.

Aus der EP 1 995 850 A1 ist ein Endenglimmschutzsystem bekannt, das resistiv-leitfähige Fäden umfasst.

Aus der JP 56091637 vom 24. Juli 1981 ist ein Glimmschutzsystem bekannt, bei dem ein Eisenhaltiges Asbestband um den Leiter gewickelt ist.

Aus der JP 56083238 vom 07. Juli 1981 ist eine elektrische Spule mit einem Glimmschutz bekannt, bei dem ein imprägniertes synthetisches Gewebe eingesetzt ist.

Aus der JP 58144551 vom 17. August 1983 ist eine elektrische Spule bekannt, bei der eine Halbleitende Zwischenschicht in einer Isolationsschicht vorgesehen ist.

Aus der JP 610 22733 vom 31. Januar 1986 ist eine elektrische Spule bekannt, bei der eine Wicklung aus einem gefüllten Thermoplasten auf einem Glasfasergewebe vorgesehen ist.

Aus der DE 1 540 079 ist ein elektrisch isolierter Leiter bekannt, der teilweise in einem leitenden Körper mit vom Leiter verschiedenem Potential eingebettet ist.

Bei elektrischen Betriebsmitteln mit hoher elektrischer Bemessungsspannung, insbesondere einer Bemessungsspannung über 5 kV, müssen beispielsweise spannungsführende Leiterstäbe eine elektrische Isolierung aufweisen, die mit einer inneren und einer äußeren Leitschicht gegen Hohlräume und Ablösungen abgeschirmt ist. Beispiele für solche elektrischen Betriebsmittel sind elektrische Generatoren, elektrische Motoren, Transformatoren, Durchführungen und elektrische Kabel.

Durch die Leitschichten wird vermieden, dass sich innerhalb der Hauptisolierung eine unregelmäßige Verteilung der elektrischen Feldstärke ergibt und so Teilentladungen hervorgerufen werden, welche die Hauptisolierung zerstören können. Die innere, zwischen der Hauptisolierung und dem Leiterstab befindliche Leitschicht wird auch als innere Potentialsteuerung (IPS) bezeichnet. Die äußere, an einer Außenseite der Hauptisolierung befindliche Leitschicht wird auch als Außenglimmschutz (AGS) bezeichnet. Das von dem elektrischen Leiterstab ausgehende elektrische Feld wird in der Hauptisolierung ausgehend von der IPS in radialer Richtung bis zum AGS abgebaut.

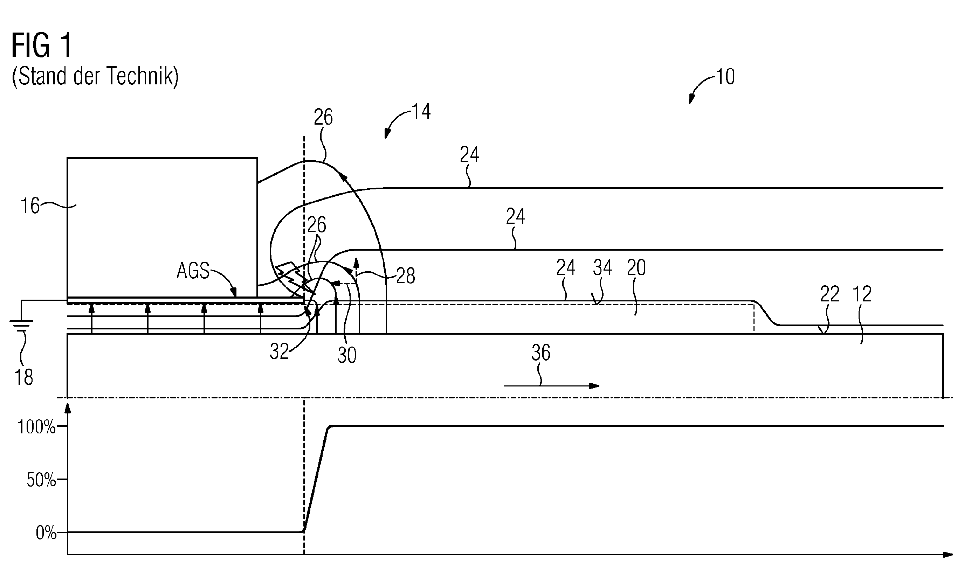

Um einen Leiterstab eines Betriebsmittels mit einer weiteren elektrischen Anordnung verbinden zu können, muss ein Stabende abisoliert sein. Mit anderen Worten ist es an einem Stabende nicht möglich, das elektrische Feld mittels der IPS, der Hauptisolierung und dem AGS in seinem Verlauf in einer gewünschten Weise zu steuern. Die in diesem Zusammenhang auftretenden Probleme sind im Folgenden anhand von FIG 1 näher erläutert. Diese zeigt ein Stabende 10 eines Generatorwicklungsstabes 12 im Bereich einer Austrittsstelle 14 des Wicklungsstabes 12 aus einem Ständerblechpaket 16 eines elektrischen Generators für eine Hochspannung. Ein mit einem Erdpotential 18 elektrisch verbundener Außenglimmschutz AGS endet an der Austrittsstelle 14. Eine Hauptisolierung 20 ist in Richtung eines abisolierten Bereichs 22 des Wicklungsstabes 12 weitergeführt.

Diese in FIG 1 gezeigte Anordnung stellt eine typische Gleitanordnung dar, die nicht nur bei Generatoren, sondern auch bei elektrischen Motoren, Transformatoren, Durchführungen und Kabeln vorgesehen sein kann. In FIG 1 sind zu der Anordnung Äquipotentiallinien 24 eines elektrischen Feldes und dazu senkrecht verlaufende Feldlinien 26 dargestellt. Das elektrische Feld umgibt den spannungsführenden Wicklungsstab 12. Bei dem elektrischen Feld weisen die Feldlinien im Austrittsbereich 14 am Ende des Außenglimmschutzes AGS jeweils neben einer radialen Komponenten 28 auch eine starke nicht lineare tangentiale Komponente 30 parallel zur Oberfläche der Hauptisolierung 20 auf. Aufgrund eines sehr dichten Verlaufs der Äquipotentiallinien 24 an einer Kante 32 des Außenglimmschutzes AGS ist ein Betrag der elektrischen Feldstärke dort am größten. Hier ergibt sich eine sehr niedrige Teilentladungs-Einsetzspannung. Daher treten im Bereich der Kante 32 immer wieder unerwünschte Gleitentladungen auf.

Im unteren Bereich von FIG 1 ist dazu noch einmal ein Verlauf eines elektrischen Potentials dargestellt, wie er sich an einer äußeren Oberfläche 34 der Hauptisolation 20 entlang einer Längserstreckungsrichtung 36 des Wicklungsstabes 12 ergibt. Im Bereich der Kante 32 steigt das Potential vom Erdpotential (0 % des Potentials des Wicklungsstabes 12), in einem Bereich von wenigen Millimetern auf 100 % des Potentials des Wicklungsstabes 12. Mit anderen Worten fällt über diesem verhältnismäßig kleinen Streckenbereich eine Spannung von 5 kV und mehr ab.

Um Teilentladungen an der Kante 32 zu verhindern, kann ein weiterer Außenglimmschutz vorgesehen sein, welcher die Hauptisolierung 20 auch jenseits der Austrittsstelle 14 umgibt. Dieser wird dann Endenglimmschutz oder Kabelendverschluss bezeichnet. Ein solcher Endenglimmschutz besteht aus einer resistiven Potential- oder Feldsteuerung, d.h. ein Endenglimmschutz weist einen höheren elektrischen Widerstand auf als ein AGS. Ein Endenglimmschutz kann durch einen teilleitenden Lack oder eine teilleitende Bandage auf der Basis von Siliziumkarbid oder einem anderen elektrisch halbleitenden Füllstoff hergestellt sein. Unter Teilleitfähigkeit wird hierbei eine Leitfähigkeit verstanden, die geringer als diejenige eines metallischen Leiters und größer als diejenige eines elektrischen Isolators ist. Ziel einer solchen Potentialsteuerung ist es, einen weniger steilen Verlauf des Oberflächenpotentials der Hauptisolierung 20 erhalten.

Bisher ist dazu bekannt, die Oberfläche 34 eines Hauptisolators 20 jenseits der Kante 32 des Außenglimmschutzes AGS mit einem halbleitenden Lack oder einer halbleitenden Bandage zu umgeben (W.P. Schmidt et al.: "Umweltverträgliche Harzimprägnierung elektrischer Maschinen mittels Stromwärme", Bundesministerium für Verkehr, Innovation und Technologie, Berichte aus Energie- und Umweltforschung, 62/2006). Es ist allerdings nötig, dass ein Widerstand des die Hauptisolierung 20 umgebenden Endenglimmschutzes von der Kante 32 aus zum abisolierten Bereich 22 des Wicklungsstabes 12 hin zunimmt. Andernfalls kann sich ein Lichtbogen zwischen dem Endenglimmschutz und dem Bereich 22 ausbilden. Um den elektrischen Widerstand des Endenglimmschutzes entlang der Erstreckungsrichtung 36 vorzugeben, kann ein teilleitender Lack in mehreren Schichten aufgetragen sein. Die Schichten erstrecken sich dabei unterschiedlich weit entlang der Erstreckungsrichtung 36. Die so entstehende Schichtanordnung weist somit eine entlang der Erstreckungsrichtung 36 veränderliche Dicke auf. Entsprechend kann vorgesehen sein, den Endenglimmschutz durch mehrere teilleitende Bandagen bereitzustellen und hierbei die Bandagen im Bereich der Kante 32 dicker zu wickeln als nahe des abisolierten Bereichs 22. Der ortsabhängige Widerstand wird bei beiden Lösungen also durch einen entsprechend vorgegebnen Leitungsquerschnitt der Lackschichten bzw. der Bandagen erreicht.

Nachteilig bei diesen Lösungen ist, dass sich im Bereich des Endenglimmschutzes Übergangsstellen ergeben, also entweder Übergänge zwischen den Lackschichten oder zwischen einzelnen Lagen der Bandagen. Hier kann dann eine Überhöhung der Feldstärke auftreten, wodurch es auch innerhalb des Endenglimmschutzes zu Teilentladungen kommen kann.

Aufgaben der vorliegenden Erfindung ist es, einen Endenglimmschutz mit hoher elektrischer Festigkeit bereitzustellen und insbesondere, ein Schicht mit variablem elektrischen Widerstand zu erzeugen.

Die Aufgabe wird durch eine elektrische Leiteinrichtung gemäß Patentanspruch 1 und eine Endenglimmschutzanordnung gemäß Patentanspruch 10 gelöst. Vorteilhafte Weiterbildungen der Erfindung sind durch die Unteransprüche gegeben.

Die erfindungsgemäße elektrische Leiteinrichtung umfasst ein elektrisch leitendes Leitelement, also z. B. einen Leiterstab aus Kupfer, und eine dieses Leitelement zumindest bereichsweise umgebende elektrisch isolierende Ummantelung, wie beispielsweise die Hauptisolierung bei einem Leiterstab. Auf der Ummantelung ist an einer Außenseite ein Endenglimmschutz in Form einer Beschichtung aus einem Material angeordnet, welches einen zu einem Ende der Ummantelung hin zunehmenden spezifischen Widerstand aufweist. Das Ende der Ummantelung kann beispielsweise einen Übergang zu einem abisolierten Bereich darstellen.

Mit anderen Worten ist das Material in Bezug auf seinen spezifischen Widerstand nicht homogen. Stattdessen ist vorgesehen, dass eine Zusammensetzung des Materials ortsabhängig ist und sich hierdurch ein ortsabhängiger spezifischer elektrischer Widerstand ergibt. Misst man also den elektrischen Widerstand kleiner Volumenelemente der Beschichtung, also beispielsweise jeweils eines Kubikmillimeters der Beschichtung, an unterschiedlichen Stellen in der Beschichtung, so ergibt sich hierbei für Volumenelemente, die sich näher zum Ende der Ummantelung hin befinden, ein größerer Widerstandswert als für diejenigen Volumenelemente, die sich in einer größeren Entfernung zum Ende der Ummantelung befinden. Diese hier beschriebene Messung geht dabei davon aus, dass der Widerstand aller Volumenelemente mit der gleichen elektrischen Spannung, d.h. bei gleicher elektrischer Feldstärke gemessen wird. Zusammenfassend nimmt der Widerstand pro Streckenabschnitt bei der Beschichtung der erfindungsgemäßen Leiteinrichtung also nicht aufgrund einer sich verändernden Schichtdicke einer mehrlagigen Lackierung oder Bandagierung zu, wie es beim Stand der Technik der Fall ist, sondern aufgrund ihres ortsabhängigen spezifischen Widerstands.

Hierdurch ergibt sich der Vorteil, dass der durch die Beschichtung gebildete Endenglimmschutz keine Schichtübergänge, Kanten oder Materialübergänge aufweist, an welchen sich eine Feldüberhöhung und damit eine Teilentladung ergeben könnte.

Unter einem Leitelement ist im Zusammenhang mit der erfindungsgemäßen elektrischen Leiteinrichtung ein im Betrieb der Leiteinrichtung spannungs- und stromführendes elektrisch leitendes Element, wie z. B. ein Stab aus Kupfer oder Aluminium, ein Draht oder eine Stromschiene, zu verstehen. Eine elektrisch isolierende Ummantelung kann beispielsweise durch eine Hauptisolation aus einem Polymer oder Glimmer bereitgestellt sein.

Eine besonders vorteilhafte Ausführungsform der erfindungsgemäßen Leiteinrichtung sieht vor, dass der spezifische Widerstand der Beschichtung zu dem Ende der Ummantelung hin gemäß einer stetig differenzierbaren Funktion von einem Anfangswert auf einen Endwert ansteigend ist. Mit anderen Worten ändert sich der Wert des spezifischen Widerstands entlang der Erstreckungsrichtung der Beschichtung zum Ende der Ummantelung hin nicht sprunghaft. Dies hat sich als besonders vorteilhaft für die Vermeidung von Feldüberhöhungen erwiesen. Ganz besonders vorteilhaft ist es dabei, wenn der Wert des spezifischen Widerstands gemäß einer Geraden zum Ende der Ummantelung hin ansteigt. Hierdurch wird in vorteilhafter Weise erreicht, dass auf der Oberfläche der Beschichtung eine elektrische Feldstärke entlang des gesamten Bereichs, in welchem der spezifische Widerstand gemäß der Geraden ansteigt, eine elektrische Feldstärke aufweist, deren tangentiale Komponente parallel zur Oberfläche der Ummantelung konstant ist.

Die Beschichtung mit dem in eine Richtung hin zunehmenden spezifischen Widerstand kann auf unterschiedliche Weise bereitgestellt werden. So ist es möglich, die Beschichtung durch eine Platte zu bilden, welche aus einem elektrisch isolierenden Material, z. B. einem Metalloxid, besteht und deren ortsabhängige Leitfähigkeit durch eine Dotierung erzeugt wurde. Wenn ein Grad der Dotierung ortsabhängig gewählt wird, lässt sich ein entsprechend ortsabhängiger spezifischer Widerstand auf der Platte einstellen. Eine andere Möglichkeit, eine Beschichtung mit ortsabhängigem spezifischen Widerstand zu erzeugen, besteht darin, eine Bandage mit mehreren Lacken zu tränken, deren Leitfähigkeit sich unterscheidet. Durch Tränken unterschiedlicher Bereiche der Bandage mit unterschiedlichen teilleitfähigen Lacken lässt sich insgesamt eine einlagige Bandage bereitstellen, deren spezifischer Widerstand ebenfalls ortsabhängig ist.

Eine ganz besonders bevorzugte Ausführungsform der erfindungsgemäßen Leiteinrichtung sieht allerdings vor, dass das Material der Beschichtung Partikel mit einer ersten elektrischen Leitfähigkeit und Partikel mit einer geringeren zweiten elektrischen Leitfähigkeit umfasst. Der Anstieg des spezifischen Widerstands zum Ende der Ummantelung hin ist dabei bewirkt, indem eine zu dem Ende hin abnehmende Konzentration derjenigen Partikel vorgesehen ist, welche die erste, höhere Leitfähigkeit aufweisen. Zugleich nimmt eine Konzentration derjenigen Partikel zum Ende der Ummantelung hin zu, welche die zweite, geringere Leitfähigkeit, also den höheren Widerstand aufweisen. Das Material stellt also eine Dispersion dar, welche wenigstens die beiden Sorten von Partikeln umfasst. Hierdurch ergibt sich der Vorteil, dass der örtliche Verlauf des spezifischen Widerstands durch Steuerung der Konzentrationen der beiden Sorten von Partikeln beim Beschichten einfach eingestellt werden kann. Es sind dabei nur zwei Partikelsorten nötig, und dennoch kann ein stufenloser Anstieg des spezifischen Widerstands erreicht werden. Mit einer Konzentration der Partikel ist dabei deren Teilchendichte in dem Material der Beschichtung gemeint.

Ein Gesamtanteil der Partikel ist dabei in dem Material bevorzugt wenigstens so groß, dass eine Perkolationsschwelle überschritten ist, d. h. es ist stets ermöglicht, Strompfade von einem dem Ende der Ummantelung zugewandten Rand der Beschichtung zu einem diesem gegenüberliegenden Rand der Beschichtung über die Partikel zu bilden. Dann wirkt sich eine durch Fertigungstoleranzen bedingte Schwankung des Gesamtanteils nur unwesentlich auf die Leitfähigkeit aus.

Eine weitere Ausführungsform der erfindungsgemäßen Leiteinrichtung sieht vor, dass das Material der Beschichtung einen elektrisch isolierenden Stoff umfasst, wobei durch den Stoff eine Matrix gebildet ist, in welcher elektrisch leitende Partikel angeordnet sind. Als besonders geeignet hat sich hierbei ein Polymer, bevorzugt ein Kunstharz oder Lack, erwiesen. Mittels eines solchen Matrix-Stoffes ist es möglich, die elektrisch leitenden Partikel als Suspension in einem flüssigen Zustand des Stoffes auf die Ummantelung aufzutragen. Dies macht das Herstellen der Beschichtung auch dann einfach, wenn die Ummantelung unregelmäßig geformt ist.

Für den Fall, dass das Material der Beschichtung elektrisch leitende Partikel mit unterschiedlicher elektrischer Leitfähigkeit umfasst, ergibt sich ein weiterer Vorteil, wenn diese Partikel die gleiche Form aufweisen und/oder gleiche chemische Bestandteile aufweisen. Dann lassen sich die Partikel unabhängig von ihrer jeweiligen elektrischen Leitfähigkeit in gleicher Weise verarbeiten. Partikel dieser Art lassen sich beispielsweise dadurch bereitstellen, dass die Partikel auf der Basis von gleichartigen elektrisch isolierenden Grundkörpern hergestellt werden, die dann mit unterschiedlich leitfähigen Schichten beschichtet werden. Entsprechend sieht eine Weiterbildung der erfindungsgemäßen Leiteinrichtung vor, dass die elektrisch leitenden Partikel jeweils aus einem Grundkörper gebildet sind, welcher eine Schicht aus einem dotierten Metalloxid aufweist. Als Grundkörper kann z. B. Glimmer verwendet werden. Als Beschichtung für die Grundkörper kann ein Metalloxid, beispielsweise Zinnoxid, verwendet werden. Zum Dotieren kann beispielsweise Antimon verwendet werden. Die Leitfähigkeit eines Partikels kann durch den Grad der Dotierung eingestellt werden. Partikel dieser Art sowie ein Verfahren zu deren Herstellung sind in der bereits genannten Druckschrift EP 2362399 A1 beschrieben. Durch die Verwendung von Glimmer ergibt sich hierbei der Vorteil, dass die daraus gebildeten Partikel eine verhältnismäßig geringe Abrasivität aufweisen und sie deshalb einfach in Form einer Partikel-Lack-Suspension mittels einer Düse auf die Ummantelung aufgesprüht werden können, um die Beschichtung zu erhalten.

Durch die Veränderung der Teilchendichte der einzelnen Partikel in einer Matrix kann sich eine Ortsabhängigkeit der mechanischen Materialeigenschaft der Beschichtung ergeben. Dies wird in vorteilhafter Weise vermieden, wenn bei dem Material der Beschichtung eine Partikel-Massen-Konzentration konstant ist.

Eine andere Weiterbildung der erfindungsgemäßen Leiteinrichtung sieht vor, dass bei dem Material der Beschichtung elektrisch leitfähige Partikel mit einer abgeflachten Form bereitgestellt sind. Beispielsweise ist es möglich, plattenförmige Partikel mit einer Dicke zwischen 250 nm und 350 nm und Kantenlängen im Bereich von 10 µm bis 20 µm zu verwenden. Durch flache Partikel ergibt sich der Vorteil, dass sich diese in der Beschichtung (beispielsweise während des Aushärtens einer flüssigen Trägermatrix) gegeneinander verschieben können, ohne dass hierdurch elektrische Leitpfade unterbrochen werden. Im Gegensatz dazu weisen globulare oder sphärische Partikel den Nachteil auf, dass sie sich nur punktuell berühren und somit bei einer geringen relativen Verschiebung derselben ein elektrischer Leitpfad unterbrochen wird. Flache Partikel weisen zudem den Vorteil auf, dass sie sich in einer Suspension langsamer entmischen. Somit lässt sich eine gleichmäßigere Verteilung der Partikel innerhalb der Beschichtung erreichen.

Die durch den Endenglimmschutz bewirkte Feldsteuerung bringt es mit sich, dass durch ein typischerweise von dem Leitelement ausgehendes elektrisches Wechselfeld (z.B. bei 50 Hz- oder 60 Hz-Netzwechselspannung) ein Wechselstrom in der Beschichtung hervorgerufen wird, der von der Beschichtung zu einem Erdpotential hin abgeführt werden muss. Dieser sollte möglichst klein sein, um elektrische Verluste der Leiteineinrichtung gering zu halten. Eine Weiterbildung der erfindungsgemäßen Leiteinrichtung sieht dazu vor, dass ein Quadrat- oder Flächenwiderstand der Beschichtung an einem dem Ende der Ummantelung abgewandten Rand der Beschichtung zwischen 8000 ° und 12000 Ω, insbesondere 10000 Ω, beträgt. Eine andere gängige Notierung der Einheit des Flächenwiderstands ist hierbei Ω_{□}. Bevorzugt weist dabei ein gegenüberliegender, dem Ende der Ummantelung zugewandter Rand der Beschichtung einen spezifischen Widerstand auf, welcher dem spezifischen Widerstand eines Materials der isolierenden Ummantelung selbst entspricht. Eine solche Beschichtung hat sich als besonders günstig erwiesen, um bei kleinen Ableitströmen den gewünschten entlang der Beschichtung linear abfallenden Potentialverlauf an deren Oberfläche zu erhalten.

Bei der erfindungsgemäßen Leiteinrichtung ist es besonders vorteilhaft, wenn die Beschichtung aus einer einlagigen Schicht gebildet ist. Dies ermöglicht eine verbesserte Wärmeabfuhr aus dem elektrischen Leitelement im Verhältnis zu den in der Regel mehrlagigen Endenglimmschutzanordnungen, wie sie gemäß dem Stand der Technik durch mehrlagiges Auftragen eines teilleitfähigen Lackes oder mehrmaliges Umwickeln mit teilleitfähigen Bandagen gebildet wird.

Bei der Beschichtung für die Ummantelung der Leiteinrichtung ist es nicht notwendig, dass die Beschichtung zunächst in flüssiger Form vorliegt, um sie nach der Fertigstellung der Ummantelung auf diese aufgetragen zu können. Es ist auch möglich, einen erfindungsgemäßen Endenglimmschutz z. B. in Form einer elektrisch leitfähigen Folie oder Bandage mit ortsabhängigem spezifischen Widerstand herzustellen und die Folie oder Bandage dann im Nachhinein auf der Ummantelung anzuordnen. In diesem Zusammenhang sieht ein weiterer Aspekt der Erfindung eine Endenglimmschutzanordnung für eine elektrische Leiteinrichtung vor, die eine Schicht umfasst, welche sich (z. B. in Form einer Folie) flächig entlang einer Erstreckungsrichtung erstreckt und hierbei einen entlang der Erstreckungsrichtung gemäß einer monoton steigenden Funktion ansteigenden spezifischen Widerstand aufweist. Diese Anordnung kann, wie bereits erwähnt, beispielsweise als Folie oder Bandage bereitgestellt sein, die dann auf die Ummantelung des Leitelements, also auf die Isolierung, als Beschichtung beispielsweise aufgeklebt werden kann. Die erfindungsgemäße Endenglimmschutzanordnung weist den Vorteil auf, dass die Schicht in einem separaten Herstellungsschritt hergestellt werden kann und erst im Nachhinein als Beschichtung auf die Ummantelung aufgetragen werden muss. Eine Möglichkeit, eine solche Endenglimmschutzanordnung bereitzustellen, besteht darin, eine Folie oder Bandage mit den bereits beschriebenen Lacken zu bestreichen oder zu besprühen.

Ein dritter Aspekt der Erfindung betrifft ein Verfahren zum Herstellen eines Endenglimmschutzes für eine elektrisch isolierende Ummantelung einer elektrischen Leiteinrichtung. Gemäß diesem Verfahren kann ein Endenglimmschutz auf der Grundlage von Partikeln wenigstens einer Sorte bereitgestellt werden, wobei die Partikel einer Sorte eine gleiche vorgegebene elektrische Leitfähigkeit aufweisen. Wenn hier von "gleicher" Leitfähigkeit der einzelnen Partikel die Rede ist, so werden auch zwei Partikel als gleich leitfähig angesehen, wenn sich ihre Leitwerte nur um einen durch den Herstellungsprozess für diese Partikel bedingten Toleranzwert unterscheiden. Gemäß dem erfindungsgemäßen Verfahren wird ein Sprühstrahl aus einem Lack und diesen Partikeln mittels einer Düsenanordnung erzeugt, die währenddessen entlang einer Oberfläche der isolierenden Ummantelung der Leiteinrichtung bewegt wird. Während des Bewegens der Düsenanordnung wird eine Konzentration der Partikel wenigstens einer Sorte in dem Sprühstrahl verändert.

Das erfindungsgemäße Verfahren weist den Vorteil auf, dass sich auf seiner Grundlage weitestgehend unabhängig von der Form der Ummantelung ein Endenglimmschutz mit ortsabhängigem spezifischen Widerstand einfach herstellen lässt.

Eine Weiterbildung des Verfahrens sieht vor, dass eine erste Sorte von Partikeln und ein erster Teil des Lackes als eine erste Suspension und eine zweite Sorte von Partikeln und ein zweiter Teil des Lackes als eine zweite Suspension bereitgestellt werden. Die beiden Suspensionen lassen sich damit über getrennte Düsen auf die Ummantelung aufsprühen. Die beiden Suspensionen werden dabei mittels der beiden Düsen der Düsenanordnung in dem Sprühstrahl oder auf der Ummantelung gemischt. Diese Weiterbildung weist den Vorteil auf, dass zum Einstellen der Konzentration der Partikel einer Sorte einfach nur ein Düsendruck der entsprechenden Düse gesteuert werden muss.

Eine andere Ausführungsform des Verfahrens sieht vor, dass wenigstens zwei unterschiedliche Partikel-Lack-Suspensionen in einer gemeinsamen Düse der Düsenanordnung gemischt werden. In diesem Zusammenhang ist unter der Düse auch deren Zuleitungssystem zu versehen. Eine derartige Düse wird auch als In-Situ-Mischer bezeichnet. Bei einem solchen Mischer lässt sich die Konzentration der unterschiedlichen Partikel durch Mischen der jeweiligen flüssigen Suspensionen erreichen. Die Mischung ist dabei in vorteilhafter Weise sehr gleichmäßig und lässt sich mit einer dennoch verhältnismäßig einfachen Anordnung bereitstellen.

Bei dem aus dem Stand der Technik bekannten Beschichtungen für einen Endenglimmschutz wird der entsprechende Lack bzw. die Bandage in Handarbeit von einem speziell dafür ausgebildeten Fachmann aufgetragen. Hierdurch wird sichergestellt, dass bei einer Serie von Generatoren deren Endenglimmschutzanordnungen möglichst ähnliche elektrische Eigenschaften aufweisen. Bei einer Weiterbildung des erfindungsgemäßen Verfahrens zum Herstellen eines Endenglimmschutzes ist vorgesehen, die beschriebene Düsenanordnung durch einen Roboter zu bewegen. In Versuchsreihen hat sich ergeben, dass hierdurch die Beschichtung um bis zu 50 % schneller aufgetragen werden kann als dies durch einen Fachmann möglich ist. Dennoch konnte bei der Verwendung eines Roboters eine gleichmäßig ausgebildete Beschichtung mit den gewünschten elektrischen Eigenschaften bereitgestellt werden.

Von der Erfindung sind auch Weiterbildungen der Endenglimmschutzanordnung umfasst, die den beschriebenen Weiterbildungen der erfindungsgemäßen Leiteinrichtung entsprechen. Ebenso umfasst die Erfindung Weiterbildungen des erfindungsgemäßen Verfahrens, welche den beschriebenen Weiterbildungen der erfindungsgemäßen Leiteinrichtung entsprechen. Diese Weiterbildungen der erfindungsgemäßen Endenglimmschutzanordnung und des erfindungsgemäßen Verfahrens sind hier deshalb nicht noch einmal gesondert beschrieben.

Die Erfindung wird im Folgenden anhand von Ausführungsbeispielen näher erläutert. Dazu zeigt:
- FIG 1: eine schematische Darstellung eines Schnitts durch eine Generatorständerwicklung mit einer Hauptisolierung ohne Endenglimmschutz und
- FIG 2: eine schematische Darstellung eines Schnitts durch eine Ausführungsform der erfindungsgemäßen Leiteinrichtung.

Die Beispiele stellen bevorzugte Ausführungsformen der Erfindung dar.

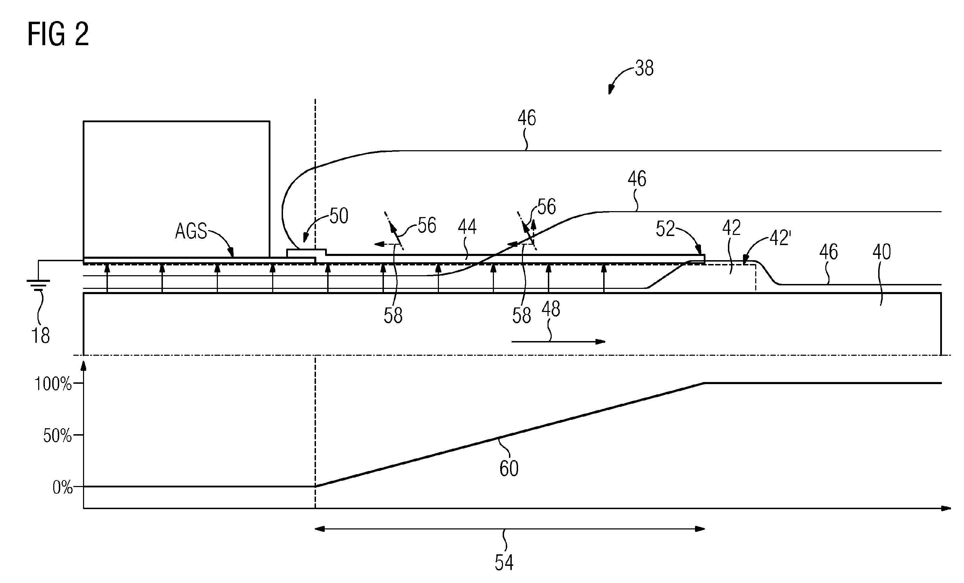

In FIG 2 ist eine Leiteinrichtung 38 mit einem elektrisch leitenden Leitelement 40, einer dieses bereichsweise umgebenden Ummantelung 42 und einem auf der Ummantelung 42 angeordneten Endenglimmschutz in Form einer Schicht 44 gezeigt. Das Leitelement 40 kann beispielsweise ein Stab aus Kupfer oder Aluminium oder ein Draht aus diesen Materialien sein. Die Ummmantelung 42 kann eine elektrische Isolierung aus einem Polymer oder Glimmer sein. Die Schicht 44 kann hier einlagig sein. Sie besteht aus einem Material mit einem ortsabhängigen spezifischen Widerstand.

In dem Leitelement 40 wird gegenüber einem Erdpotential 18 eine elektrische Wechselspannung erzeugt, die beispielsweise eine Frequenz von 50 Hz und einen Effektivwert von über 5 kV aufweisen kann. Durch den inhomogen verteilten spezifischen Widerstand der Schicht 44 wird eine Feldsteuerung bewirkt. Hierdurch sind Äquipotentiallinien 46 eines das Leitelement 40 umgebenden elektrischen Feldes im Vergleich zu den Äquipotentiallinien 24 (siehe FIG 1) verformt. Das Potential fällt hierdurch von einem äußeren Ende 42' der Ummantelung 42 von 100 % des Potentials des Leitelements 40 entgegen einer Erstreckungsrichtung 48 der Schicht 44 auf das Erdpotential 18 an einer Kante 50 der Schicht 44 ab, welche dem Ende 42' der Ummantelung 42 abgewandt ist. Die Kante 50 ist mit einem Außenglimmschutz AGS verbunden, der mit dem Erdpotential 18 verbunden ist. Ein Widerstand des Außenglimmschutzes AGS ist so gering, dass die Kante 50 über den Außenglimmschutz AGS auf dem Erdpotential 18 gehalten wird.

Der spezifische Widerstand des Materials der Schicht 44 steigt von der Kante 50 aus in die Erstreckungsrichtung 48 bis zu einer dem Ende 42' der Ummantelung 42 zugewandten Kante 52 gemäß einer stetig differenzierbaren Funktion an. Eine Länge 54 der Schicht 44 entlang der Erstreckungsrichtung 48 kann in dem gezeigten Beispiel zwischen 15 cm und 25 cm betragen.

In dem unteren Teil von FIG 2 ist ein Potentialverlauf 60 gezeigt, wie er sich auf der äußeren Oberfläche der Leiteinrichtung 10, also der Anordnung aus dem Leitelement 40 der Ummantelung 52, der Schicht 44 und dem Außenglimmschutz AGS ergibt. Durch die Kopplung des Außenglimmschutzes AGS mit dem Erdpotential 18 ergibt sich an dessen Oberfläche ein Potential, welches dem Erdpotential 18, d. h. 0 % des Potentials des Leitelements 40 entspricht. Ausgehend von der Kante 50 der Schicht 44 steigt das Potential nahezu linear entlang der Erstreckungsrichtung 48 der Schicht 44 bis auf den Wert von 100 % des Potentials des Leitelements 40 an der Kante 52 der Schicht 44 an. Entsprechend fällt die Spannung des Leitelements 40 an der Oberfläche der Schicht 44 über deren gesamte Länge 54 ab. Der Potentialabfall ist dabei an der Oberfläche der Schicht 44 durch den gewählten Verlauf des ortsabhängigen spezifischen Widerstands der Schicht 44 sehr gleichmäßig. An der Oberfläche der Schicht 44 weist deshalb das elektrische Feld Feldlinien 56 auf, die entlang der Erstreckungsrichtung 48 der Schicht 44 betragsmäßig nahezu gleich große tangentiale Komponenten 58 aufweisen. Entlang der Schicht 44 gibt es somit keine lokale Feldüberhöhung, durch welche eine Teilentladung verursacht werden könnte.

Im Vergleich zu der in FIG 1 gezeigten Situation erfolgt durch die Schicht 44 bei der Leiteinrichtung 38 von FIG 2 der tangentiale Potentialabbau entlang der Isolierstoffoberfläche gleichmäßig. Im Idealfall wird er linearisiert. Dies wird erreicht, indem pro Längeneinheit entlang der Erstreckungsrichtung 48 immer der gleiche Spannungsbetrag über der Schicht 44 abfällt. Hierzu wird ein in axialer Richtung des Leitelements 40, d. h. in Erstreckungsrichtung 48 der Schicht 44, ein ortsabhängiger und spannungsabhängiger Widerstandsbelag durch die Schicht 44 bereitgestellt.

Die Schicht 44 ist aus zwei Lacken mit unterschiedlich teilleitfähigen Partikeln hergestellt worden. Der erste Lack beinhaltet teilleitfähige Partikel, mit denen der höchste Widerstandsbelag in der Schicht 44 erzeugt werden kann. Die Schicht 44 weist den höchsten Widerstandsbelag dabei an der Kante 52 auf. Der zweite Lack beinhaltet teilleitfähige Partikel, die den niedrigsten Widerstandsbelag in der Schicht darstellen können. Den niedrigsten Widerstandsbelag weist die Schicht 44 an ihrer Kante 50 auf.

Beide Lacke konnten in derselben Weise verarbeitet werden, da die Partikel der beiden teilleitfähigen Füllstoffe, d. h. die Partikel beider Partikelsorten, in den Lacken gleiche geometrische Abmessungen sowie gleiche chemische Oberflächen und gleiche Dichten aufweisen. Die beiden Lacke können beispielsweise auf der Grundlage des Verfahrens hergestellt worden sein, das in der Druckschrift EP 2362399 A1 beschrieben ist. Die Schicht 44 wurde auf die Ummantelung 42 durch Aufsprühen appliziert, wobei am Übergang zwischen dem Außenglimmschutz AGS und der Schicht 44 der Lack mit dem niederohmigen Füllstoff aufgesprüht wurde und dann graduell in die Erstreckungsrichtung 48 über die Länge 54 der Schicht 44 die Konzentration des niederohmigen Füllstoffs bis zur Kante 52 abgesenkt wurde. Gleichzeitig wurde die Konzentration des hochohmigen Füllstoffs in der Schicht 44 ausgehend von der Kante 50 bis zur Kante 52 hin beim Aufsprühen der Lacke erhöht. Hierdurch wurde erreicht, dass der resultierende Endenglimmschutz-Widerstandsbelag der Schicht 44 kontinuierlich über die gesamte Länge 54 ansteigt, ohne dass Widerstandssprünge vorhanden sind. Entsprechend ergeben sich auch im Potentialverlauf 60 keine Potentialsprünge entlang der Erstreckungsrichtung 48 in der Schicht 44.

Das Aufsprühen der Schicht 44 kann durch zwei Verfahren geschehen sein. Zum einen können zwei Spritzdüsen verwendet werden, von denen jeweils eine einen der beiden Lacke versprüht. Am Übergang zum Außenglimmschutz AGS wird die Spritzdüse mit dem Lack, welcher die niederohmigen Partikel enthält, mit 100 % Sprühintensität betrieben, während die dazu parallel angeordnete zweite Spritzdüse, welche den Lack mit dem hochohmigen Füllstoff versprühen kann, mit 0 % Spritzintensität betrieben wird. Beim Bewegen der Düsenanordnung, bestehend aus den beiden Spritzdüsen, entlang der Erstreckungsrichtung 48 wird die Sprühintensität der Spritzdüse mit dem niederohmigen Füllstoff verringert und gleichzeitig die Sprühintensität der Spritzdüse mit dem hochohmigen Füllstoff erhöht. Bei Erreichen der Kante 52 wird die Spritzdüse mit dem hochohmigen Füllstoff mit 100 % Sprühintensität betrieben, während die Spritzdüse mit dem niederohmigen Füllstoff mit 0 % Sprühintensität betrieben wird.

Es ist auch möglich, nur eine Spritzdüse zu verwenden und die beiden teilleitfähigen Lacke jeweils ortsauflösend der Spritzdüse zuzuführen. Hierbei werden die beiden teilleitfähigen Lacke direkt vor der Spritzdüse gemischt und zwar derart, dass am Übergang des Außenglimmschutzes AGS zum Endenglimmschutz hin 100 % niederohmiger Lack versprüht werden und am gegenüberliegenden Ende der Schicht 44, an der Kante 52, 100 % hochohmiger Lack.

Mittels der beiden beschriebenen Applikationsmethoden kann ein Endenglimmschutz in Form der Schicht 44 bereitgestellt werden, der einen örtlich definierten Widerstandsbelag aufweist und gleichzeitig kontinuierliche Übergänge vom Endenglimmschutz-Anfang an der Kante 50 bis zum Endenglimmschutz-Ende an der Kante 52 aufweist. So kann gewährleistet werden, dass kein Widerstandssprung über die Endenglimmschutz-Länge 54 auftritt und somit auch kein Potentialsprung. Andernfalls würden als Folge eines Potentialssprungs Teilentladungen auftreten, die jetzt vermieden werden, wodurch der gesamte Endenglimmschutz-Aufbau eine deutliche Steigerung in der elektrischen Festigkeit erfährt.

Indem der Endenglimmschutz in Form der Schicht 44 einlagig ist, ergibt sich ein weiterer Vorteil. Je mehr Lagen einer teilleitfähigen Schicht aufgestrichen werden, desto dicker ist der Endenglimmschutz. Entsprechend kann weniger Wärme in derselben Zeit von dem Leitelement 40 an die Umgebung abgegeben werden. Da sich ein Endenglimmschutz erwärmen kann, (kurzzeitig bis zu 180 °C) ist es von großem Vorteil, die entstandene Wärme schnellstmöglich abzuführen, um eine Degradation des Endenglimmschutzes zu vermeiden. Da die Leiteinrichtung 38 lediglich eine einzige Endenglimmschutz-Schicht 44 benötigt, ist eine besonders gute Wärmeabfuhr im Verhältnis zum Stand der Technik gewährleistet.

Insgesamt ist gezeigt, wie durch die Erfindung die Applikation einer einlagigen Endenglimmschutz-Schicht durch Verwendung von zwei Lackierdüsen mit jeweils einem hochohmigen und einem niederohmigen teilleitfähigen Lackreservoir erreicht werden kann, wobei die Sprühintensität einer Düse indirekt proportional zur Sprühintensität der anderen Düse verändert wird, während die Düsenanordnung über der Ummantelung 42 bewegt wird. Hierdurch ergibt sich ein ortsabhängiges Mischungsverhältnis. Ein weiteres mögliches Applikationsverfahren besteht darin, eine einzige Sprühdüse mit einem In-Situ-Mischer zu verwenden, der wiederum den hochohmigen mit dem niederohmigen teilleitfähigen Lack ortsabhängig mischt, d. h. das Mischungsverhältnis in Abhängigkeit von einer Position der Sprühdüse über der Ummantelung 42 einstellt.

## Patentansprüche

1. Elektrische Leiteinrichtung (38) mit
- einem elektrisch leitenden Leitelement und
- einer dieses zumindest bereichsweise umgebenden elektrisch isolierenden Ummantelung (42), auf welcher an einer Außenseite eine Beschichtung (44) aus einem Material angeordnet ist, welches einen, zu einem Ende (42') der Ummantelung (42) hin zunehmenden, spezifischen Widerstand aufweist,
**dadurch gekennzeichnet, dass**
- der spezifische Widerstand zu einem Ende (42') hin gemäß einer stetig differenzierbaren Funktion, von einem Anfangswert auf einen Endwert ansteigend ist;
- das Material der Beschichtung (44) Partikel mit einer ersten elektrischen Leitfähigkeit und Partikel mit einer geringeren zweiten elektrischen Leitfähigkeit umfasst und
- der Anstieg des spezifischen Widerstands zu dem Ende (42') der Ummantelung hin durch eine abnehmende Konzentration der Partikel mit der ersten Leitfähigkeit und eine zunehmende Konzentration der Partikel mit der zweiten Leitfähigkeit bewirkt ist, wobei
- ein Gesamtanteil der Partikel in dem Material wenigstens so groß ist, dass eine Perkolationsschwelle überschritten ist.

2. Leiteinrichtung (38) nach Anspruch 1, **dadurch gekennzeichnet, dass** die stetig differenzierbare Funktion eine Gerade ist.

3. Leiteinrichtung (38) nach Anspruch 1 oder 2, **dadurch gekennzeichnet, dass** das Material der Beschichtung (44) einen elektrisch isolierenden Stoff umfasst, insbesondere ein Polymer, bevorzugt Kunstharz oder Lack, wobei durch den Stoff eine Matrix gebildet ist, in welcher elektrisch leitende Partikel angeordnet sind.

4. Leiteinrichtung (38) nach einem der vorhergehenden Ansprüche, **dadurch gekennzeichnet, dass** das Material der Beschichtung (44) elektrisch leitende Partikel die gleiche Form aufweisen und/oder gleiche chemische Bestandteile aufweisen, umfasst.

5. Leiteinrichtung (38) nach einem der vorhergehenden Ansprüche, **dadurch gekennzeichnet, dass** das Material der Beschichtung (44) elektrisch leitende Partikel aufweist, die jeweils aus einem Grundkörper, insbesondere Glimmer, gebildet sind, welcher eine Schicht aus einem dotierten Metalloxid aufweist.

6. Leiteinrichtung (38) nach einem der vorhergehenden Ansprüche, **dadurch gekennzeichnet, dass** bei dem Material der Beschichtung (44) eine Partikel-Massen-Konzentration konstant ist.

7. Leiteinrichtung (38) nach einem der vorhergehenden Ansprüche, **dadurch gekennzeichnet, dass** bei dem Material der Beschichtung (44) elektrisch leitfähige Partikel mit einer abgeflachten Form aufweist.

8. Leiteinrichtung (38) nach einem der vorhergehenden Ansprüche, **dadurch gekennzeichnet, dass** ein Flächenwiderstand der Beschichtung (44) an einem dem Ende (42') der Ummantelung (42) abgewandten Rand (50) der Beschichtung (44) 10000 Ohm beträgt und ein dem Ende (42') zugewandter Rand (52) einen spezifischen Widerstand aufweist, welcher dem spezifischen Widerstand eines Materials der Ummantelung (42) entspricht.

9. Leiteinrichtung (38) nach einem der vorhergehenden Ansprüche, **dadurch gekennzeichnet, dass** die Beschichtung (44) aus einer einlagigen Schicht gebildet ist.

10. Endenglimmschutzanordnung für eine elektrische Leiteinrichtung (38) nach einem der Ansprüche 1 bis 9, umfassend eine Schicht (44), welche sich flächig entlang einer Erstreckungsrichtung (48) erstreckt und hierbei einen entlang der Erstreckungsrichtung (48) gemäß einer monoton steigenden Funktion ansteigenden spezifischen Widerstand aufweist.

## Claims

1. Electrical conducting device (38) comprising
- an electrically conductive conducting element and
- an electrically insulating sheath (42) surrounding said conducting element at least regionally, with a coating (44) consisting of a material which has a resistivity which increases towards one end (42') of the sheath (42) is arranged on an outer side of said sheath,
**characterized in that**
- the resistivity increases towards one end (42') in accordance with a continuously differential function, from an initial value to a final value;
- the material of the coating (44) comprises particles with a first electrical conductivity and particles with a lower second electrical conductivity, and
- the increase in the resistivity towards the end (42') of the sheath is effected by a decrease in concentration of the particles with the first conductivity and an increase in concentration of the particles with the second conductivity, wherein
- a total content of the particles is at least so great in the material that a percolation threshold is exceeded.

2. Conducting device (38) according to Claim 1, **characterized in that** the continuously differential function is a straight line.

3. Conducting device (38) according to Claim 1 or 2, **characterized in that** the material of the coating (44) comprises an electrically insulating substance, in particular polymer, preferably synthetic resin or enamel, wherein, by means of the substance, a matrix is formed in which electrically conductive particles are arranged.

4. Conducting device (38) according to one of the preceding claims, **characterized in that** the material of the coating (44) comprises electrically conductive particles which have the same shape and/or have the same chemical constituents.

5. Conducting device (38) according to one of the preceding claims, **characterized in that** the material of the coating (44) has electrically conductive particles which are each formed from a base body, in particular mica, which has a layer consisting of a doped metal oxide.

6. Conducting device (38) according to one of the preceding claims, **characterized in that**, in the case of the material of the coating (44), a particle-to-mass concentration is constant.

7. Conducting device (38) according to one of the preceding claims, **characterized in that** the material of the coating (44) has electrically conductive particles with a flattened shape.

8. Conducting device (38) according to one of the preceding claims, **characterized in that** a sheet resistance of the coating (44) at a rim (50) of the coating (44) remote from the end (42') of the sheath (42) is 10000 ohms, and a rim (52) facing the end (42') has a resistivity which corresponds to the resistivity of a material of the sheath (42).

9. Conducting device (38) according to one of the preceding claims, **characterized in that** the coating (44) is formed from a single-ply layer.

10. End corona shielding arrangement for an electrical conducting device (38) according to one of Claims 1 to 9, comprising a layer (44) which extends areally along a direction of extent (48) and in this case has a resistivity which increases along the direction of extent (48) in accordance with a monotonically increasing function.

## Revendications

1. Dispositif conducteur électrique (38), avec
- un élément conducteur électriquement conducteur et
- une gaine électriquement isolante (42) entourant celui-ci au moins localement, sur laquelle est disposé, sur un côté extérieur, un revêtement (44) fabriqué dans un matériau qui présente une résistance spécifique croissante en direction d'une extrémité (42') de la gaine (42),
**caractérisé en ce que**
- la résistance spécifique est croissante en direction d'une extrémité (42') suivant une fonction différentiable de façon continue, depuis une valeur initiale jusqu'à une valeur finale;
- le matériau du revêtement (44) comprend des particules présentant une première conductivité électrique et des particules présentant une deuxième conductivité électrique plus faible et
- la croissance de la résistance spécifique en direction de l'extrémité (42') de la gaine est obtenue par une concentration décroissante des particules présentant la première conductivité électrique et une concentration croissante des particules présentant la deuxième conductivité électrique, dans lequel
- une proportion totale des particules dans le matériau est au moins élevée au point qu'un seuil de percolation soit dépassé.

2. Dispositif conducteur (38) selon la revendication 1, **caractérisé en ce que** la fonction différentiable de façon continue est une droite.

3. Dispositif conducteur (38) selon la revendication 1 ou 2, **caractérisé en ce que** le matériau du revêtement (44) comprend une matière électriquement isolante, en particulier un polymère, de préférence une résine synthétique ou une laque, dans lequel une matrice est formée par la matière, dans laquelle des particules électriquement conductrices sont disposées.

4. Dispositif conducteur (38) selon l'une quelconque des revendications précédentes, **caractérisé en ce que** le matériau du revêtement (44) comprend des particules électriquement conductrices qui présentent la même forme et/ou qui présentent les mêmes constituants chimiques.

5. Dispositif conducteur (38) selon l'une quelconque des revendications précédentes, **caractérisé en ce que** le matériau du revêtement (44) présente des particules électriquement conductrices, qui sont formées en un corps de base, en particulier de mica, qui présente une couche en un oxyde métallique dopé.

6. Dispositif conducteur (38) selon l'une quelconque des revendications précédentes, **caractérisé en ce qu'**une concentration massique de particules est constante dans le matériau du revêtement (44).

7. Dispositif conducteur (38) selon l'une quelconque des revendications précédentes, **caractérisé en ce que** le matériau du revêtement (44) présente des particules électriquement conductrices avec une forme aplatie.

8. Dispositif conducteur (38) selon l'une quelconque des revendications précédentes, **caractérisé en ce qu'**une résistance de surface du revêtement (44) vaut 10000 ohms sur un bord (50) du revêtement (44) situé à l'opposé de l'extrémité (42') de la gaine (42) et un bord (52) tourné vers l'extrémité (42') présente une résistance spécifique, qui correspond à la résistance spécifique d'un matériau de la gaine (42).

9. Dispositif conducteur (38) selon l'une quelconque des revendications précédentes, **caractérisé en ce que** le revêtement (44) est formé en une seule couche.

10. Dispositif anti-effluves terminal pour un dispositif électriquement conducteur (38) selon l'une quelconque des revendications 1 à 9, comprenant une couche (44) qui s'étend à plat le long d'une direction d'extension (48) et qui présente en l'occurrence une résistance spécifique croissante suivant une fonction croissante monotone le long de la direction d'extension (48).
